(19)

Europäisches
Patentamt
European
Patent Office
Office européen
des brevets

(11) **EP 2 811 179 A1**

(12) **EUROPEAN PATENT APPLICATION**

(43) Date of publication:
**10.12.2014 Bulletin 2014/50**

(21) Application number: **14168112.2**

(22) Date of filing: **13.05.2014**

(51) Int Cl.:
*F16B 19/10* (2006.01)      *B21J 15/04* (2006.01)
*B29C 65/60* (2006.01)      *F16B 5/04* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.05.2013   JP 2013103882**

(71) Applicant: **Newfrey LLC
Newark,
Delaware 19711 (US)**

(72) Inventors:
• **Okamoto, Kazuya
441-8540, Aichi (JP)**
• **Kanzaki, Masashi
441-8540, Aichi (JP)**

(74) Representative: **Witte, Weller & Partner
Patentanwälte mbB
Postfach 10 54 62
70047 Stuttgart (DE)**

(54) **Structure and method for mounting a metal collar**

(57)      A composite steel plate (30) has a core material (31) and steel plates (32, 33) on both sides of the core material and has mounting holes. A metal collar (10; 20) has a flange (11; 21), a sleeve portion (12; 22) extending from the flange, and a locking portion (14; 24) extending from the sleeve portion and having a thickness thinner than that of the sleeve portion. The present invention provides a mounting structure for mounting the metal collar onto the composite steel plate. The locking portion is enlarged, and a first enlarged diameter portion (14a; 24a) is formed. Then the sleeve portion is enlarged, and a second enlarged diameter portion (12a; 22a) is formed. One steel plate (32) is thereby clamped between the first enlarged diameter portion and the second enlarged diameter portion, and the other steel plate (33) is thereby clamped between the second enlarged diameter portion and the flange. Thus, the metal collar (10; 20) is mounted onto the composite steel plate (30). (Fig. 6)

FIG. 6

EP 2 811 179 A1

**Description**

**Cross-Reference To Related Applications**

This application claims priority from Japanese Patent Application No. 2013-103882, filed on May 16, 2013, the disclosure of which is incorporated herein by reference.

**Background Of The Invention**

The present invention pertains to a structure and method for mounting a metal collar to a composite steel plate and pertains in particular to a structure and method which can securely mount a metal collar to a composite steel plate without looseness.

In order to reduce the weight of covers used in automobiles such as heat insulators, panel coverings for the bottom of cars and the like, a soft core material made of resin and the like and a metal plate surface made from composite steel plate is often used. In this composite steel plate, a metal collar comprised of a sleeve portion and a flange at one end of the sleeve is inserted in a mounting hole provided in the plate thickness direction of the composite steel plate, and the metal collar is mounted to the composite steel plate by buckling the sleeve portion. A press or fastening tool is generally used to buckle the sleeve of the metal collar and to push down the metal collar in the axial direction, mounting it to the composite steel plate. Next, a bolt is passed through a center hole of the metal collar, and the composite steel plate is fastened to the object to be fastened.

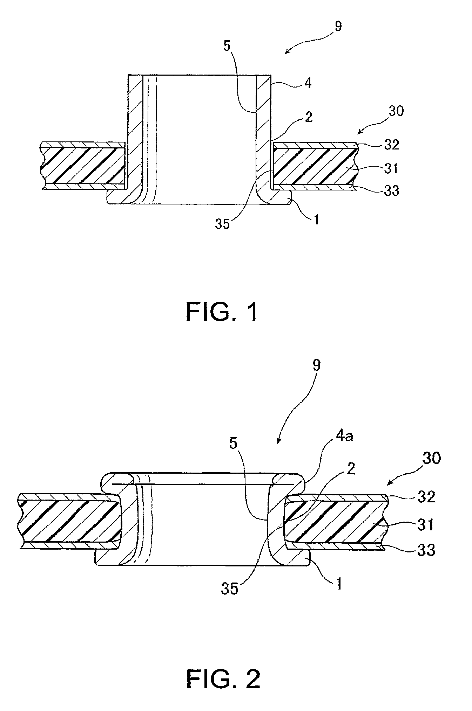

Figure 1 is a cross-sectional diagram showing the appearance when the flange of an existing metal collar is inserted in the mounting hole of a composite steel plate. Figure 2 is a cross-sectional diagram which shows the appearance when the metal collar is mounted to the composite steel plate by buckling the sleeve of the metal collar, and the periphery of the mounting hole of the composite steel plate is clamped between the buckled enlarged diameter portion and the flange.

Referring to Figure 1, metal collar 9 is provided with a cylindrical sleeve 2 and a flange 1 which is formed on one end of sleeve 2 and which has a diameter larger than sleeve 2. A mounting hole 5 is formed on the inside of flange 1 and sleeve 2 which passes through the axial direction of metal collar 9. On the side opposite to flange 1 of sleeve 2, there is a locking portion 4 which has the same plate thickness as sleeve 2. Locking portion 4 is made to deform, and composite steel plate 30 is fastened between the deformed locking portion 4 and flange 1.

The composite steel plate 30 to which metal collar 9 is mounted is comprised of a core material 31 made of soft plastic or the like, with steel plates 32,33 on both sides; in order to mount metal collar 9, a mounting hole 35 is formed which passes from steel plate 32 through core material 31 as far as steel plate 33. The inner diameter of mounting hole 35 is approximately equal to or slightly larger than the outer diameter of sleeve 2 of metal collar 9 so that sleeve 2 of metal collar 9 can be inserted. The inner diameter of mounting hole 35 is smaller than the outer diameter of flange 1. If metal collar 9 is inserted in mounting hole 35 from the bottom of Figure 1, with locking portion 4 going first, the upper surface of flange 1 abuts the periphery of mounting hole 35 of composite steel plate 30, so as to stop.

Figure 2 is a cross-sectional diagram which shows the appearance when metal collar 9 is mounted to composite steel plate 30 by buckling locking portion 4 of sleeve 2 of metal collar 9, and the periphery of mounting hole 35 is clamped between the buckled enlarged diameter portion 4a and flange 1.

With flange 1 of metal collar 9 supported from below, locking portion 4 is pushed down from above in the lengthwise axial direction and buckles so that it widens to the outside slightly below the end surface of locking portion 4 of metal collar 9, forming enlarged diameter portion 4a which has an outer diameter larger than the inner diameter of mounting hole 35 of composite steel plate 30; composite steel plate 30 is clamped by enlarged diameter portion 4a and flange 1, and metal collar 9 is mounted to composite steel plate 30.

Figure 2 shows the appearance when the region near mounting hole 35 of composite steel plate 30 is pushed up and down by enlarged diameter portion 4a and flange 1; core material 31 is compressed slightly in the up and down direction, and steel plate 32 is bent towards the bottom facing the center of mounting hole 35. Because sleeve 2 is pushed in the up and down direction, the inner diameter of mounting hole 35 is curved in the direction where it becomes smaller.

As in Figure 2, when the metal collar 9 is mounted to composite steel plate 30, the core material 31, which is made from resin, receives a compressing force in the up and down direction, and creeps easily. If core material 31 creeps, and the plate thickness becomes thin, the space between steel plate 32 and steel plate 33 also narrows, and an opening is produced between enlarged diameter portion 4a and steel plate 32 and between steel plate 33 and flange 1, whereupon that metal collar 9 becomes loose.

Patent Reference 1 discloses a metal collar which is mounted in the mounting hole of a resin component. The metal collar has a cylindrical sleeve and a flange formed at one end of the sleeve, and the sleeve is inserted in the mounting hole of the resin component; an enlarged diameter portion is formed by enlarging the outer diameter of the sleeve, and the resin component is fastened by clamping between the enlarged diameter portion and the flange. The metal collar of Patent Reference 1 can be mounted to the resin component simply, by using a fastening tool.

However, the metal collar of Patent Reference 1 is mounted to a resin component and cannot be mounted to a composite steel plate which has a surface layer which is a steel plate. If the metal collar of Patent Reference 1 is mounted to a composite steel plate, it is impossible to firmly secure the steel plate which is the surface layer of the composite steel plate; looseness is produced in the metal collar, as shown in Figure 2.

Patent Reference 2 discloses a structure used for fastening in which the core material layer is a soft material, and a bolt is inserted through the bolt hole of a composite material (composite steel plate) which is comprised of a surface layer which is steel plate. A cylindrical component (a collar) comprised of a sleeve and a guard portion is interposed between the bolt and the bolt hole and is fastened by a nut. When the bolt is tightened in, the sleeve of the cylindrical component is enlarged in the direction of the diameter and is deformed on the side of the core material layer; the guard portion abuts the steel plate, and the composite material is fastened to the object to be fastened. In Patent Reference 2, because the cylindrical component is filled with a soft core material and the core material is fastened, the fastening power of the bolt is not lowered, and a stable fastening torque is maintained, even under the action of a heat cycle.

However, in the structure used for fastening in Patent Reference 2, by means of tightening the bolt, the sleeve of the cylindrical component is enlarged in the direction of the diameter, and it is necessary to tighten the bolt with a strong force in order to deform the cylindrical component, requiring effort. Also, if the deformation towards the core material layer side of the sleeve of the cylindrical component is large, a concern exists that the steel plate of the surface layer of the composite material may peel from the core material.

For this reason, a structure and method of mounting is sought in which a metal collar can be mounted securely to a composite steel plate, with no looseness being produced.

Also, a structure and method of mounting a metal collar is sought in which the mounting to a composite steel plate is rapid and simple.

[Prior Art Reference 1] Published, Unexamined Patent Application 2013-1050

[Prior Art Reference 2] Published, Unexamined Patent Application 2011-133088

**Summary of the Invention**

Accordingly, the object of the present invention is to offer a structure and method for mounting a metal collar in which it is possible to mount a metal collar securely to a composite steel plate so that there is no looseness.

In order to achieve this object, the present invention uses a metal collar which has a flange, a sleeve and a locking portion which is thinner than the sleeve, by buckling the locking portion to form a first enlarged diameter portion; by buckling the sleeve to form a second enlarged diameter portion; whereby the second enlarged diameter portion meshes into the soft core material of the composite steel plate, and the composite steel plate is fastened.

A structure or subassembly of a first embodiment of the present invention includes a metal collar defining an axis and provided with a flange; a sleeve which extends in the axial direction from the flange; a locking portion which is contiguous with the sleeve and which extends in the axial direction; and a sleeve mounting hole which passes through in the axial direction from the flange through the locking portion. A method of mounting this subassembly into the mounting hole of a composite steel plate comprised of a core material and steel plates on both sides of the core material, includes enlarging the diameter of a locking portion of the sleeve to form a first enlarged diameter portion; and enlarging the diameter of the sleeve to form a second enlarged diameter portion; thereby clamping one steel plate of the composite steel plate between the first enlarged diameter portion and the second enlarged diameter portion, and thereby clamping the other steel plate between the second enlarged diameter portion and the flange.

According to the first embodiment of the present invention, it is possible to securely mount a metal collar to a composite steel plate with no looseness by enlarging the diameter of a locking portion of a sleeve to form a a first enlarged diameter portion and enlarging the diameter of the sleeve to form a second enlarged diameter portion, so that the second enlarged diameter portion meshes into the soft core material. Further, it is thus possible to mount the metal collar to the composite steel plate simply and rapidly.

It is desirable for the plate thickness of the locking portion to be thinner than the plate thickness of the sleeve. If the plate thickness of the locking portion is thinner than the plate thickness of the sleeve, it is easy to enlarge the diameter of the thin locking portion, and it is therefore possible to clamp the composite steel plate between the first enlarged diameter portion and the flange during a first stage and to form the second enlarged diameter portion during a second stage.

It is desirable for the thickness of the composite steel plate to be less than the length of the sleeve. If the thickness of the composite steel plate is less than the length of the sleeve, because the diameter of the thick sleeve is enlarged, and a second enlarged diameter portion is formed, the metal collar can be firmly fastened to the composite steel plate. It is desirable that the length of the sleeve should be equal to or less than twice the thickness of the composite steel plate; the preferred length of the sleeve is larger than 1.5 times the thickness of the composite steel plate.

The second embodiment of a subassembly or structure of the present invention includes a metal collar defining an axis and provided with a flange; a sleeve which extends in the axial direction from the flange; a middle portion which is contiguous with the sleeve and which extends in the axial direction; a locking portion which is contiguous with the middle portion and which extends in the axial direction; and a sleeve mounting hole which passes through in the axial direction from the flange through the locking portion. The sleeve is mounted into the mounting hole of a composite steel plate comprised of a core material and steel plates on both sides of the core material. A method according to the second embodiment of the present invention includes mounting the metal collar to the composite steel plate by enlarging the diameter of the locking portion to form a first enlarged diameter portion; and enlarging the diameter of the middle portion and the sleeve to form a second enlarged diameter portion; thereby clamping one steel plate of the composite steel plate between the enlarged diameter portion and the second enlarged diameter portion, and clamping the other steel plate of the composite steel plate between the second enlarged diameter portion and the flange.

According to the second embodiment of the present invention, a first enlarged diameter portion is formed by enlarging the diameter of the locking portion, and a second enlarged diameter portion is formed by enlarging the diameter of the middle portion and the sleeve. If there is a middle portion between the sleeve and the locking portion, the diameter of the second enlarged diameter portion is greatly enlarged and the second enlarged diameter portion meshes into the soft core material of the composite steel plate. As a result, it is possible to mount a metal collar to a composite steel plate so that there is no looseness. Also, it is possible to mount the metal collar to the composite steel plate simply and rapidly.

It is desirable that the thickness of the middle portion be thinner than the plate thickness of the sleeve, and that the plate thickness of the locking portion be thinner than the plate thickness of the middle portion.

If the plate thickness of the middle portion is thinner than the plate thickness of the sleeve, and the thickness of the locking portion is thinner than the thickness of the middle portion, the diameter of the locking portion, which has a thin plate thickness, is easily enlarged, and it is possible during the first stage to clamp the composite steel plate between the first enlarged diameter portion and the flange and to form the second enlarged diameter portion during the second stage.

It is desirable that the thickness of the composite steel plate be larger than the length of the sleeve and smaller than the sum total length of the sleeve and the middle portion.

If the thickness of the composite steel plate is larger than the length of the sleeve and smaller than the sum total length of the sleeve and the middle portion, it is easily bent from a step portion between the sleeve and the middle portion; the second enlarged diameter portion is formed by enlarging the diameter of the middle portion and the thick sleeve, and it is thus possible to firmly mount the metal collar to the composite steel plate.

The length of the sleeve added to the middle portion is preferably either equal to or less than twice the thickness of the composite steel plate; moreover, it is further preferable for it to be 1.5 times the thickness of the composite steel plate.

A third embodiment of the present invention is a method of mounting into the mounting hole of a composite steel plate comprised of a core material and steel plates on both sides of the core material, a metal collar defining an axis and provided with a flange, a sleeve which extends in the axial direction from the flange, a locking portion which is contiguous with the sleeve and which extends in the axial direction and which is thinner than the sleeve, and a sleeve mounting hole which passes through in the axial direction from the flange through the locking portion, including the following:

(a) inserting the sleeve and the locking portion of the metal collar from below into the mounting hole of the composite steel plate;
(b) while supporting the flange from below, pushing the locking portion downwards, such that a first enlarged diameter portion is formed by enlarging the diameter of the locking portion;
(c) pushing the first enlarged diameter portion downwards such that a second enlarged diameter portion is formed by enlarging the diameter of the sleeve; such that
(d) one steel plate of the composite steel plate is clamped between the first enlarged diameter portion and the second enlarged diameter portion, and the other steel plate is clamped between the flange and the second enlarged diameter portion; whereby the metal collar is mounted to the composite steel plate.

According to the third embodiment of the present invention, the metal collar can be simply and strongly mounted in the composite steel plate by pressing down on the metal collar in an axial direction using a press or a fastening tool.

A fourth embodiment of the present invention is a method of mounting into the mounting hole of a composite steel plate comprised of a core material and steel plates on both sides of the core material,: a metal collar defining an axis and provided with a flange; a sleeve which extends in the axial direction from the flange; a middle portion which is contiguous with the sleeve and which extends in the axial direction and which is thinner than the sleeve; a locking portion which is contiguous with the middle portion and which extends in the axial direction and which is thinner than the middle portion; and a sleeve mounting hole which passes through in the axial direction from the flange through the locking portion, including the following

(a) inserting the sleeve, the middle portion and the locking portion of the metal collar from below into the mounting hole of the composite steel plate;

(b) while supporting the flange from below, pushing the locking portion downwards, such that a first enlarged diameter portion is formed by enlarging the diameter of the locking portion;

(c) pushing the first enlarged diameter portion downwards, such that a second enlarged diameter portion is formed by enlarging the diameter of the middle portion and the sleeve; such that

(d) one steel plate of the composite steel plate is clamped between the first enlarged diameter portion and the second enlarged diameter portion, and the other steel plate of the composite steel plate is clamped between the second enlarged diameter portion and the flange, and whereby the metal collar is mounted to the composite steel plate.

According to the present invention, it is thus possible to achieve a structure or subassembly and method for mounting a metal collar in which a metal collar can be securely mounted to a composite steel plate with no looseness.

Also according to the present invention, it thus is possible to achieve a structure or subassembly and method for mounting a metal collar in which the metal collar is rapidly and simply mounted to a composite steel plate.

**Brief Description of the Drawings**

Figure 1 is a cross-sectional diagram showing the appearance when the sleeve of an existing metal collar is inserted into the mounting hole of a composite steel plate.

Figure 2 is a cross-sectional diagram showing the appearance of the metal collar mounted to the composite steel plate when, as shown in Figure 1, the locking portion of the metal collar is buckled, and the composite steel plate is clamped between the buckled enlarged diameter portion and the flange.

Figure 3A is a top plan view of the metal collar of the first embodiment of the present invention.

Figure 3B is a front elevation showing a portion of the metal collar of Figure 3A in cross-section.

Figure 3C is a bottom plan view of the metal collar shown in Figure 3A.

Figure 4 is a cross-sectional diagram showing the sleeve of the metal collar of Figure 3A inserted in the mounting hole of the composite steel plate.

Figure 5 is a cross-sectional diagram showing the intermediate stage of mounting the metal collar to the composite steel plate, in which an enlarged diameter portion has been made by buckling the locking portion of the metal collar of Figure 3A.

Figure 6 is a cross-sectional diagram showing the stage in which the diameter of the sleeve of the metal collar of Figure 3A is enlarged and is mounted to the composite steel plate.

Figure 7 is a cross-sectional diagram which shows the appearance when the metal collar of the second embodiment of the present invention is inserted in the mounting hole of the composite steel plate.

Figure 8 is a cross-sectional diagram showing the intermediate stage of mounting to a composite steel plate, in which the locking portion of the metal collar of Figure 7 is buckled, forming an enlarged diameter portion.

Figure 9 is a cross-sectional diagram showing the stage in which the sleeve of the metal collar of Figure 7 is buckled and mounted to the composite steel plate.

**Detailed Description of the Preferred Embodiments**

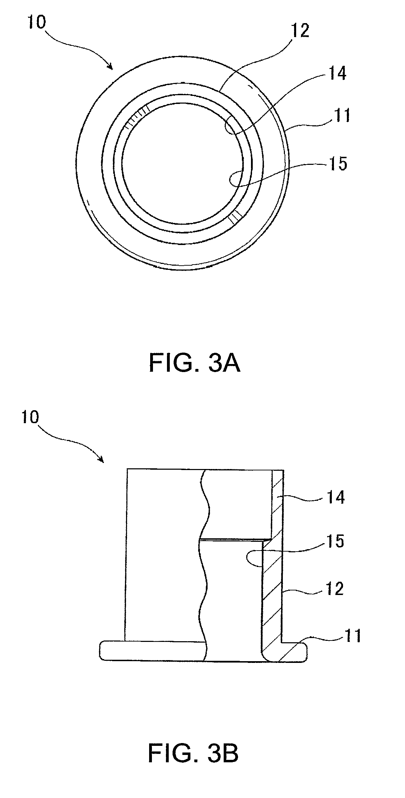

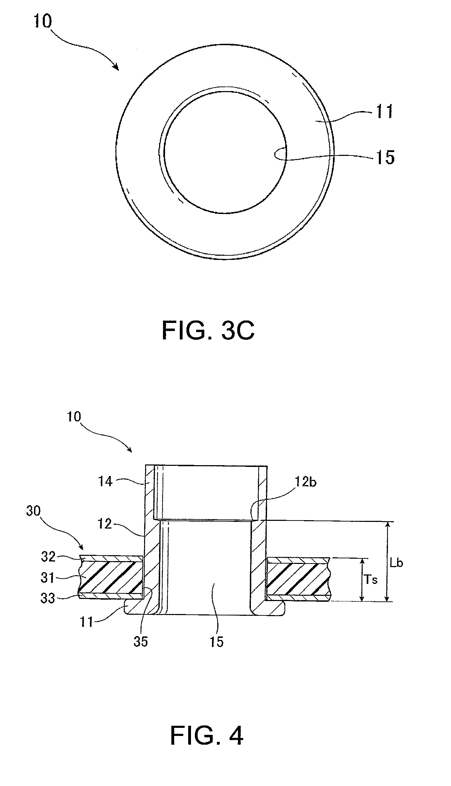

Figure 3A is a top plan view of metal collar 10 of a first embodiment of the present invention; Figure 3B is a front elevation of a portion in cross-section, and Figure 3C is a bottom plan view. Metal collar 10 defines a longitudinal axis (not shown) and is provided with a cylindrical sleeve 12 and a flange 11 formed at one end of sleeve 12 and which has a diameter larger than sleeve 12. A sleeve mounting hole 15 is formed on the inside of flange 11 and sleeve 12 which passes through metal collar 10 in its axial direction. A cylindrical locking portion 14, which is thinner than sleeve 12, is formed in sleeve 12 on the opposite side of flange 11. Thus the metal collar 10 can be fastened to composite steel plate 30 (Figures 4-6) by deforming locking portion 14. The outer diameters of sleeve 12 and locking portion 14 are approximately the same, and the inner diameter of locking portion 14 is larger than the inner diameter of sleeve 12. Locking portion 14 is thinner than sleeve 12 so that it easily deforms.

Any material capable of plastic deformation may be used as the material for metal collar 10. For example, iron, aluminum, or the like may be used. Also, a surface processing of collar 10 may be employed, such as an anti-rust plating, if it can withstand the deformation during fastening. Although the present Specification sets forth a 'metal collar,' materials other than metal may also be used, if they are capable of plastic deformation.

Figures 4-6 will illustrate a method in which the metal collar of the first embodiment of the present invention is set in the composite steel plate 30, and then fastening it to the composite steel plate 30. Figures 4-6 are a simulation by finite element analysis using CAE (Computer Aided Engineering) of the operation in which metal collar 10 is mounted to composite steel plate 30 by pushing it in the axial direction.

When metal collar 10 is mounted to composite steel plate 30, a press or fastening tool is used to push the metal collar in the axial direction.

Figure 4 is a cross-sectional diagram which shows the metal collar 10 of the first embodiment of the present invention set and then mounted in the composite steel plate 30. A mounting hole 35 is formed in composite steel plate 30 for inserting metal collar 10. The inner diameter of mounting hole 35 is approximately equal to the outer diameter of sleeve 12, so that sleeve 12 of metal collar 10 can be inserted therein. The inner diameter of mounting hole 35 is smaller than the outer diameter of flange 11. The length of sleeve 12 in the axial direction Lb (the length in the axial direction from the upper surface of flange 11 to the step portion which is the boundary between sleeve 12 and locking portion 14) is larger than the thickness Ts of composite steel plate 30. By means of

$$Ts < Lb \qquad \text{Equation (1),}$$

it is possible to mount metal collar 10 on composite step plate 30 by not only buckling locking portion 14, but sleeve 12 as well.

If metal collar 10 is inserted into mounting hole 35 from the bottom, as in Figure 4, the upper surface of flange 11 abuts the periphery of mounting hole 35 of composite steel plate 30, and stops.

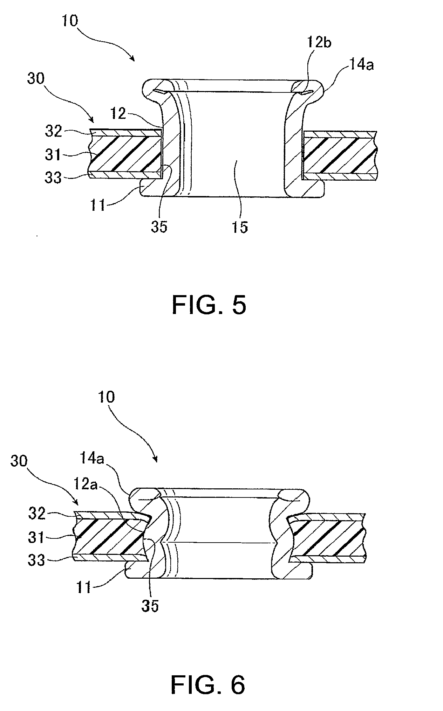

Figure 5 is a cross-sectional diagram which shows the intermediate stage in the method of mounting metal collar 10 to composite steel plate 30 to form a subassembly. The flange 11 of metal collar 10 is first supported from below; then a load is placed on locking portion 14 from above. This will buckle thin locking portion 14, so that the outer diameter of the middle portion in the up and down direction of locking portion 14 becomes deformed such that its diameter increases, and becomes a first enlarged diameter portion 14a. The outer diameter of enlarged diameter portion 14a thus also becomes larger than the inner diameter of mounting hole 35 of composite steel plate 30. Thus, although a step portion 12b and the upper part of sleeve 12 below step portion 12b have been deformed so that their diameters slightly increase, the lower part of sleeve 12 has hardly deformed at all.

Figure 6 is a cross-sectional diagram which shows the appearance when a large force is again applied on locking portion 14 (first enlarged diameter portion 14a) and metal collar 10 is mounted to composite steel plate 30. From what is shown in Figure 5, a large force again pushes on locking portion 14 (first enlarged diameter portion 14a) from above in the lengthwise axial direction. Because first enlarged diameter portion 14a cannot enlarge the diameter of the upper part of sleeve 12, and flange 11 cannot enlarge the diameter of the lower part of sleeve 12, the diameter of the central portion of sleeve 12 must become enlarged so as to widen towards the outside, forming a second enlarged diameter portion; and core material 31 is thereby pressed and widened.

Steel plate 32 is thus clamped between the first enlarged diameter portion 14a and second enlarged diameter portion 12a, and steel plate 33 is thus clamped between the second enlarged diameter portion 12a and flange 11. Metal collar 10 is thereby fastened to composite steel plate 30. Metal collar 10 deforms, and steel plate 32 and steel plate 33 are each fastened, from the above direction. As a result, even if the core material 31 of composite steel plate 30 creeps, no looseness is produced at metal collar 10.

It is desirable that the length of sleeve 12 in the axial direction Lb be less than or equal to twice the length Ts of the composite steel plate 30. Because the upper part of sleeve 12 widens to the outside by means of first enlarged diameter portion 14a, the center of the enlarged diameter of second enlarged diameter portion 12a is out of position slightly below the center of sleeve 12 in the axial direction (the flange side). For this reason, by means of making the length of sleeve 12 in the axial direction equal to or less than twice the length Ts of the thickness of composite steel plate 30, the diameter of sleeve 12 is enlarged so that it widens to the outside in the middle of core material 31 between steel plate 32 and steel plate 33, as shown in Figure 6.

Preferably, the length of sleeve 12 in the axial direction Lb should lie in the range of from greater than 1.5 times the length Ts of composite steel plate 30, to less than or equal to twice the length Ts. By this means, it is possible to obtain a sufficiently large second enlarged diameter portion 12a. Namely,

$$1.5Ts < Lb \leq 2Ts \qquad \text{Equation (2)}$$

is preferable.

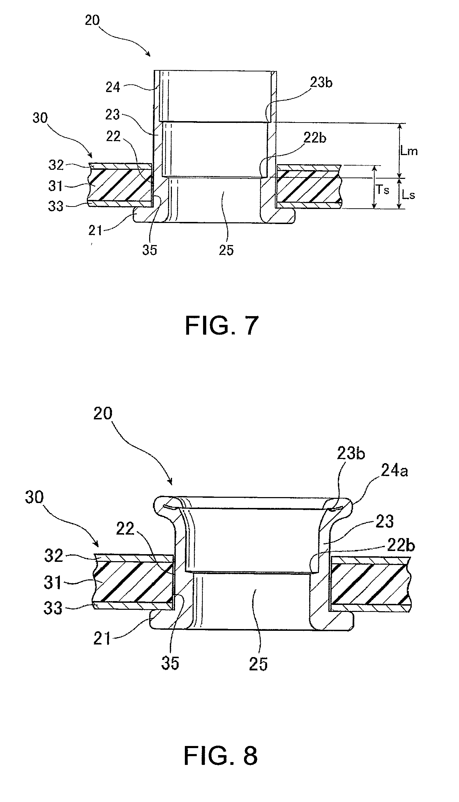

Figures 7-9 illustrate a method in which metal collar 20 of the second embodiment of the present invention is set in composite steel plate 30 and fastened. Figures 7-9, as in Figures 4-6, are simulations using finite element analysis.

Figure 7 is a cross-sectional diagram showing metal collar 20 of the second embodiment of the present invention set in composite steel plate 30. In the same fashion as for metal collar 10 of the first embodiment of the present invention, metal collar 20 defines a longitudinal axis (not shown) and is provided with a cylindrical sleeve 22 and a flange 21 formed at one end of sleeve 22 which has a diameter larger than sleeve 22. On the side opposite to flange 21 of sleeve 22 is a cylindrical locking portion 24 for fastening to composite steel plate 30 by deforming. A cylindrical middle portion 23 is provided between sleeve 22 and locking portion 24, which is thinner than sleeve 22, but thicker than locking portion 24. That is, sleeve 12 of metal collar 10 of the first embodiment of the present invention, is divided into a sleeve 22 and a middle portion 23 in the metal collar 20 of the second embodiment of the present invention. A sleeve mounting hole 25 is defined by flange 21, sleeve 22, middle portion 23 and locking portion 24, and passes through metal collar 20 in its axial direction. The outer diameters of sleeve 22, middle portion 23, and locking portion 24 are approximately equal. The inner diameter of mounting hole 25 becomes larger in the order of sleeve 22, middle portion 23 and locking portion 24. The thickness of the sleeve 22 decreases in the order sleeve 22, middle portion 23 and locking portion 24.

The length of sleeve 22 in the axial direction Ls (the length in the axial direction from the upper surface of flange 21 to a step portion 22b at the boundary between sleeve 22 and middle portion 23) is thinner than the thickness Ts of composite steel plate 30. Step portion 22b is provided at the boundary between middle portion 23 and locking portion 24. The length of middle portion 23 from step portion 23a to step portion 23b is taken as Lm, and the length Ls of sleeve 22 in the axial direction plus the length Lm of middle portion 23 in the axial direction is larger than the thickness Ts of composite steel plate 30. And by means of

$$Ls < Ts < Ls + Lm \qquad \text{Equation (3)},$$

it is possible to mount metal collar 20 to composite steel plate 30 by buckling not only locking portion 24, but middle portion 23 and sleeve 22 as well.

If metal collar 20 is inserted from the bottom (Figure 7) into mounting hole 35, the locking portion 24 going first, the upper surface of flange 21 abuts the periphery of mounting hole 35 of composite steel plate and is stopped.

Figure 8 is a cross-sectional diagram which shows the intermediate stage in the method of mounting or connecting metal collar 20 to composite steel plate 30 to form a subassembly. Flange 21 of metal collar 20 is supported from below, then a load is applied on locking portion 24 from above. The thin locking portion 24 then buckles, and the outer diameter of middle portion 23 in the up and down direction of locking portion 24 is deformed so as to become larger and becomes first enlarged diameter portion 24a. Along with the enlarged diameter of locking portion 24, the outer diameter of first enlarged diameter portion 24a becomes larger than the inner diameter of mounting hole 35 of composite steel plate 30. Step portion 22b and the upper portion of middle portion 23 below step portion 22b then deform so as to have a slightly enlarged diameter, but the lower part of middle portion 23 and sleeve 22 remain hardly deformed at all.

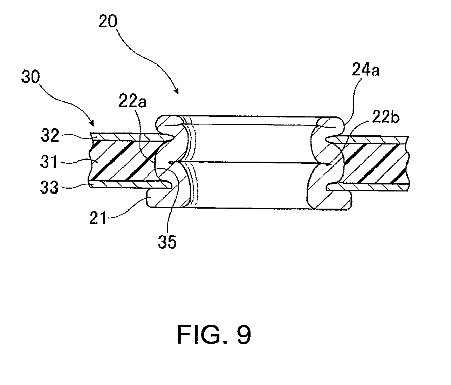

Figure 9 is a cross-sectional diagram which shows the appearance when metal collar 30 is mounted to composite steel plate 30. From what is shown in Figure 8, first enlarged diameter portion 24a is again pressed from above in the axial direction by a large force.

The diameter of the upper part of middle portion 23 is not enlarged by first enlarged diameter portion 24a. The diameter of the lower part of sleeve 22 is not enlarged by flange 21. The part of middle portion 23 lower than the part which contacts steel plate 32; and step portion 22b; and the part of sleeve 22 above the part which contacts steel plate 33 all contact the soft core material 31. Step portion 22b, which is between middle portion 23 and sleeve 22, is at a position in the axial direction corresponding to core material 31. Metal collar 20 is easily bent from step portion 22b to the outside. For this reason, the second enlarged diameter portion is formed by enlarging the diameter of step portion 22b so that it widens as much possible to the outside.

Steel plate 32 is thus clamped between the first enlarged diameter portion 24a and the second enlarged diameter portion 22a; steel plate 33 is thus clamped between the second enlarged diameter portion 22a and flange 21; and metal collar 20 is thereby fastened to composite steel plate 30.

In the second embodiment of the present invention, middle portion 23 and sleeve 22 are easily bent from step portion 22b. As a result, the second enlarged diameter portion 22a of the second embodiment shown in Figure 9, when compared to the second enlarged diameter portion 12a of the first embodiment shown in Figure 6, has a larger outer diameter, and it is possible to obtain a stronger holding power than with metal collar 10 of the first embodiment of the present invention.

It is desirable that the length Ls+Lm in the axial direction, which is the length of sleeve 22 added to the length of middle portion 23, be less than or equal to twice the length Ts of composite steel plate 30. Because the upper part of middle portion 23 is widened to the outside by first enlarged diameter portion 24a, the resulting center of the enlarged diameter of the second enlarged diameter portion 22a is set off slightly lower (the flange side) than the center in the axial direction of sleeve 22 added to middle portion 23. As a result, by making the length in the axial direction Ls+Lm (which is sleeve 22 added to middle portion 23) equal to or less than twice the thickness Ts of composite steel plate 30, it becomes easier to bend from step portion 22b, and the diameters of sleeve 22 and middle portion 23 are enlarged so that they widen to the outside in the core material 31 between steel plate 32 and steel plate 33.

Preferably, it is desirable that the length in the axial direction of sleeve 22 added to middle portion 23 be made larger than 1.5 times the thickness Ts of composite steel plate 30. By means of this, it is possible to obtain a second enlarged diameter portion 22a which is sufficiently large.

That is,

$$1.5Ts < Ls + Lm \leq 2Ts \qquad \text{Equation (4)}$$

Table 1 shows the dimensions for each part of the metal collar 10 of the first embodiment and metal collar 20 of the second embodiment, of the present invention. Preferably, metal collars 10, 20 of embodiments 1 and 2 of the present invention use an M6 bolt.

Table 1 Dimensions for Each Part of Metal Collars 10, 20

| Part | Measurement | Embodiment 1 (mm) | Embodiment 2 (mm) |
|---|---|---|---|
| Locking portion 14,24 | Outer diameter | Ø12 | Ø12 |
| | Thickness | 0.8 | 0.8 |
| | Length | 5.5 | 5.5 |
| Middle portion 23 | Thickness | -- | 1.3 |
| | Length Lm | -- | 8.5 |
| Sleeve 12,22 | Thickness | 1.3 | 1.8 |
| | Length Lb, Ls | 8.0 | 3.5 |
| Composite steel plate 30 | Plate thickness Ts | 4 | 6 |

According to the first and second embodiments of the present invention, it is possible to mount a metal collar to a composite steel plate with strong holding strength, without any looseness.

Also, it is possible to mount a metal collar to a composite steel plate rapidly and simply.

An embodiment for mounting a metal collar to a composite steel plate was explained by means of the first and second embodiments of the present invention. Although the metal collar of the present invention is suitable for mounting to a composite steel plate, it is not limited to this. It is also suitable for mounting to the mounting hole of a material which has a soft center, with hard, plate-shaped material on both sides. For example, it may be mounted to corrugated cardboard which has plastic plates glued on each side.

It will be appreciated by persons skilled in the art that the above embodiments have been described by way of example only, and not in any limitative sense, and that various alterations and modifications are possible without departure from the scope of the invention as defined by the appended claims.

**Claims**

1. A subassembly of a metal collar (10; 20) and a composite steel plate (30) including a core material (31) and steel plates (32, 33) on both sides of the core material (31); the metal collar (10; 20) defining an axis and having a flange (11; 21), a sleeve (12; 22) which extends in the axial direction from the flange (11; 21), a locking portion (14; 24) which is contiguous to the sleeve and which extends in the axial direction, and a through hole (15; 25) which passes through from the flange (11; 21) through the locking portion (14; 24) in the axial direction, the subassembly assembled by a method comprising:

enlarging the diameter of the locking portion (14; 24) to form a first enlarged diameter portion (14a; 24a);
enlarging the diameter of the sleeve (12; 22) to form a second enlarged diameter portion (12a; 22a); such that one steel plate (32) of the composite steel plate (30) is clamped between the first enlarged diameter portion (14a; 24a) and the second enlarged diameter portion (12a; 22a); and
the other steel plate (33) of the composite steel plate (30) is clamped between the second enlarged diameter portion (12a; 22a) and the flange (11; 21).

2. The subassembly as set forth in Claim 1, wherein the plate thickness of the locking portion (14; 24) is thinner than the plate thickness of the sleeve (12; 22).

3. The subassembly as set forth in Claim 1 or 2, wherein:

the sleeve (12; 22) has a predetermined length; and wherein
the thickness of the composite steel plate (30) is less than the length of the sleeve (12; 22).

4. The subassembly as set forth in Claim 2 or 3, in which the length of the sleeve (12; 22) is greater than 1.5 times the thickness of the composite steel plate (30), and/or less than or equal to twice the thickness of the composite steel plate (30).

5. A subassembly of a metal collar (20) and a composite steel plate (30) including a core material (31) and steel plates (32, 33) on both sides of the core material (31); the metal collar (20) defining an axis and having a flange (21), a sleeve (22) which extends in the axial direction from the flange, a middle portion (23) which is contiguous to the sleeve (22) and which extends in the axial direction, a locking portion (24) which is contiguous to the middle portion (23) and which extends in the axial direction, and a through hole (25) which passes through from the flange (21) through the locking portion (24) in the axial direction, the subassembly assembled by a method comprising:

enlarging the diameter of the locking portion (24) to form a first enlarged diameter portion (24a);
enlarging the diameter of the middle portion (23) and the sleeve (22) to form a second enlarged diameter portion (22a); such that
one steel plate (32) of the composite steel plate (30) is clamped between the first enlarged diameter portion (24a) and the second enlarged diameter portion (22a); and
the other steel plate (33) of the composite steel plate (30) is clamped between the second enlarged diameter portion (22a) and the flange (21).

6. The subassembly as set forth in Claim 5, wherein the plate thickness of the middle portion (23) is thinner than the plate thickness of the sleeve (22), and the plate thickness of the locking portion (24) is thinner than the plate thickness of the middle portion (23).

7. The subassembly as set forth in Claim 5 or 6, wherein:

the sleeve (22) has a predetermined length; and
the thickness of the composite steel plate (30) is larger than the length of the sleeve (22) and smaller than the sum total length of the sleeve (22) and the middle portion (23).

8. The subassembly as set forth in Claim 6 or 7, wherein the combined length of the sleeve (22) and the middle portion (23) is greater than 1.5 times the thickness of the composite steel plate (30), and/or less than or equal to twice the thickness of the composite steel plate (30).

9. A method of mounting a metal collar into a mounting hole of a composite steel plate including a core material and steel plates on both sides of the core material, wherein the metal collar defines an axis and includes a flange, a sleeve which extends in the axial direction from the flange, a locking portion which is contiguous with the sleeve, which extends in the axial direction and which is thinner than the sleeve, and a mounting hole which passes through in the axial direction from the flange through the locking portion; comprising:

(a) inserting the sleeve and the locking portion of the metal collar from below into the mounting hole of the composite steel plate;
(b) supporting the flange from below;
(c) pushing downwards on the locking portion to enlarge the diameter of the locking portion to form a first enlarged diameter portion;
(d) pushing downwards on the first enlarged diameter portion to enlarge the diameter of the sleeve to form a second enlarged diameter portion; such that
(e) one steel plate of the composite steel plate is clamped between the first enlarged diameter portion and the second enlarged diameter portion; and

(f) the other steel plate of the composite steel plate is clamped between the second enlarged diameter portion and the flange; whereby

(g) the metal collar is mounted to the composite steel plate.

10. A method of mounting a metal collar into a mounting hole of a composite steel plate including a core material and steel plates on both surfaces of the core material, wherein the metal collar defines an axis and includes a flange, a sleeve which extends in the axial direction from the flange, a middle portion which is contiguous with the sleeve, which extends in the axial direction and which is thinner than the sleeve, a locking portion which is contiguous with the middle portion, which extends in the axial direction and which is thinner than the middle portion, and a mounting hole which passes through in the axial direction from the flange through the locking portion, comprising:

(a) inserting the sleeve and the middle portion and the locking portion of the metal collar from below into the mounting hole of the composite steel plate;

(b) supporting the flange from below,

(c) pushing downwards on the locking portion to enlarge the diameter of the locking portion to form a first enlarged diameter portion;

(d) pushing downwards on the first enlarged diameter portion to enlarge the diameter of the middle portion and the sleeve to form a second enlarged diameter portion; such that

(e) one steel plate of the composite steel plate is clamped between the first enlarged diameter portion and the second enlarged diameter portion; and

(f) the other steel plate of the composite steel plate is clamped between the second enlarged diameter portion and the flange; whereby

(g) the metal collar is mounted to the composite steel plate.

FIG. 1

FIG. 2

FIG. 3A

FIG. 3B

10

11

15

## FIG. 3C

10

14

12b

30

32

31

33

12

11

35

15

Lb

Ts

## FIG. 4

**FIG. 5**

**FIG. 6**

FIG. 7

FIG. 8

FIG. 9

Europäisches
Patentamt

European
Patent Office

Office européen
des brevets

# EUROPEAN SEARCH REPORT

**Application Number**

EP 14 16 8112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 99/25982 A1 (WABASH NATIONAL CORP [US]) 27 May 1999 (1999-05-27) * page 6, lines 1-21; figures * ----- | 1-10 | INV. F16B19/10 B21J15/04 B29C65/60 |
| A | GB 1 244 034 A (GOODRICH CO B F [US]) 25 August 1971 (1971-08-25) * figures 1-5 * ----- | 1-10 | F16B5/04 |
| A | DE 30 37 087 A1 (KABEL METALLWERKE GHH [DE]) 6 May 1982 (1982-05-06) * figures * ----- | 1-10 | |
| A | US 3 296 765 A (ROHE FREDERICK W ET AL) 10 January 1967 (1967-01-10) * figures * ----- | 1-10 | |

TECHNICAL FIELDS
SEARCHED (IPC)

F16B
B21J
B29C

The present search report has been drawn up for all claims

| Place of search | Date of completion of the search | Examiner |
|---|---|---|
| Munich | 28 October 2014 | Pöll, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 14 16 8112

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2014

| Patent document cited in search report | | Publication date | Patent family member(s) | | Publication date |
|---|---|---|---|---|---|
| WO 9925982 | A1 | 27-05-1999 | AU | 1455299 A | 07-06-1999 |
| | | | WO | 9925982 A1 | 27-05-1999 |
| GB 1244034 | A | 25-08-1971 | DE | 1775136 A1 | 27-05-1971 |
| | | | FR | 1581751 A | 19-09-1969 |
| | | | GB | 1244034 A | 25-08-1971 |
| | | | NL | 6810765 A | 04-02-1969 |
| | | | US | 3443473 A | 13-05-1969 |
| DE 3037087 | A1 | 06-05-1982 | NONE | | |
| US 3296765 | A | 10-01-1967 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013103882 A
- WO 20131050 A

- WO 2011133088 A